# EUROPÄISCHE PATENTSCHRIFT

(11) **EP 2 684 757 B1**
(45) Veröffentlichungstag und Bekanntmachung des Hinweises auf die Patenterteilung: **22.03.2017**
(21) Anmeldenummer: 13450028.9
(22) Anmeldetag: 10.07.2013
(51) Int. Cl.: B61D 3/16, B61D 45/00

(54) **Güterwagen**
Freight cars
Wagon de marchandises

(30) Priorität: 12.07.2012 AT 7782012
(43) Veröffentlichungstag der Anmeldung: 15.01.2014
(73) Patentinhaber: Kutschera, Wilhelm, 9500 Villach (AT)
(72) Erfinder: Kutschera, Wilhelm, 9500 Villach (AT)
(74) Vertreter: Beer & Partner Patentanwälte KG

(56) Entgegenhaltungen:
- DE-A1- 10 312 638
- DE-A1- 19 516 561
- GB-A- 1 266 689
- US-A- 3 376 062
- US-A- 3 922 004
- US-B1- 6 363 864

## Beschreibung

Die Erfindung betrifft einen Güterwagen (Güterwagon) mit den Merkmalen des einleitenden Teils von Anspruch 1 (GB 1 266 689 A).

Derzeit sind unterschiedlichen Typen von Güterwagen bekannt. Beispielsweise gibt es Containertragwagen, Wagen für den Transport von Coils (Shimmswagon), Rungenwagen und Schiebewandwagen, u.s.w.

Ein Problem bei den bekannten Güterwagen ist es, dass diese nicht zu jeder Zeit eingesetzt werden können, sondern nur, wenn in ihnen Ware transportiert werden soll, für die sie eingerichtet sind.

Die bekannten Güterwagen der eingangs genannten Gattung sind auch insofern problematisch, als Rückfahrten meistens leer durchgeführt werden müssen, wenn keine Paarigkeit gegeben ist.

Aus der DE 195 16 561 A ist eine konvertible Frachtraumkonstruktion für rollenförmigen Lasten, wie StahlCoils, bekannt. Die bekannte Frachtraumkonstruktion wird auf die Ladefläche eines Güterwagens aufgesetzt, ohne dass die Ladefläche selbst geändert wird. Es handelt sich bei der bekannten Frachtraumkonstruktion um eine vom Unterbau des Güterwagens abnehmbare Einheit. Die aus der DE 195 16 561 A bekannte Frachtraumkonstruktion weist Trogabschnitte auf, in denen Coils aufgenommen werden können. Die Trogabschnitte werden von keilförmigen Teilen gebildet, die in verschiedene Richtungen verschwenkbar sind. So können die keilförmigen Teile der Trogabschnitte aus ihrer die Trogabschnitte bildenden Stellung um horizontale Achsen verschwenkt werden, um eine ebene Bodenkonfiguration zu bilden. Die Teile der Trogabschnitte können auch in eine zum Boden der Frachtraumkonstruktion senkrechte Stellung hochgeschwenkt werden, um eine Seitenwand zu bilden.

Nachteilig bei der aus der DE 195 16 561 A bekannten Frachtraumkonstruktion ist es, dass sie auf Güterwagen aufgesetzt werden muss und so wegen ihres Gewichtes die verfügbare Nutzlast des Güterwagen verkleinert.

Aus der GB 1 266 689 A ist eine Vorrichtung zum Befördern von Lasten bekannt, die ähnlich Containern stapelbar ist. Am Boden der Vorrichtung sind in Längsrichtung verlaufende, starre Schrägflächen vorgesehen, die eine Mulde bilden, in der StahlCoils aufgenommen werden können. Die aus der GB 1 266 689 A bekannte Einrichtung kann auf Schienenfahrzeugen oder Lastkraftwagen verwendet werden.

Die US 6,363,864 B offenbart einen vier-achsigen Güterwagen, dessen Ladefläche durch gebogene Tragelemente mulden- oder wannenförmig ausgebildet ist und für den Transport von StahlCoils dient.

Weder bei der GB 1 266 689 A noch bei der US 6,363,864 B sind die die Mulde bildenden Teile verstellbar, so dass die Vorrichtung der GB 1 266 689 A und der Güterwagen der US 6,363,864 B nur für den Transport von Coils geeignet sind.

Der Erfindung liegt die Aufgabe zu Grunde, einen Güterwagen der eingangs genannten Gattung zur Verfügung zu stellen, der je nach Bedarf zum Transport unterschiedlicher Waren eingerichtet werden kann.

Gelöst wird diese Aufgabe erfindungsgemäß mit einem Güterwagen, welcher die Merkmale von Anspruch 1 aufweist.

Bevorzugte und vorteilhafte Ausgestaltungen des Güterwagens gemäß der Erfindung sind Gegenstand der Unteransprüche.

Von Vorteil bei der Erfindung ist, dass durch die Abdeckungen der Coilmulden bei Bedarf eine durchgehende Ladefläche des Güterwagens gebildet werden kann.

Durch die erfindungsgemäße Ausgestaltung des Güterwagens, kann dieser entsprechend der Art des zu transportierenden Gutes angepasst werden, indem er entsprechend dem Gut ausgerüstet wird. Dabei besteht die Möglichkeit den erfindungsgemäßen Güterwagen für den Transport unterschiedlicher Güter auszurüsten. So wird eine Verringerung der Wagentypen möglich, sodass man nicht mehr verschiedene Arten, insbesondere die vier verschiedenen, oben genannten Arten, von Güterwagen benötigt.

Vorteilhaft bei dem erfindungsgemäßen Güterwagen ist es, dass er eine ebene Ladefläche aufweist, die in vielfacher Weise ausgenützt werden kann.

Anders als bei der Frachtraumkonstruktion, die aus DE 195 16 561 A oder der GB 1 266 689 A bekannt ist, wird bei der Erfindung kein gesonderter, vom Güterwagen getrennter Bauteil, in dem Einrichtungen zur Aufnahme von Coils vorgesehen sind, auf einen Güterwagen aufgesetzt. Vielmehr sind bei der Erfindung die Bauteile, welche die mehrfache, an die jeweilige Verwendung des Güterwagens angepasste Ausgestaltung des Güterwagens erlauben, am Güterwagen unmittelbar angebracht oder können wenigstens am Güterwagen unmittelbar angebracht werden, wenn sie nicht am Güterwagen vorgesehen sind.

Durch die erfindungsgemäße Ausgestaltung des Güterwagens, wird die Paarigkeit der Transporte deutlich erhöht, wodurch sich eine höhere Gesamtausnutzung der Güterwagen ergibt.

Beispielsweise ist der erfindungsgemäße Güterwagen als Planenschiebewagen ausgebildet. Die Plane kann verschiebbar sein, sodass die Ladefläche in dem Bereich, wo sich keine Plane befindet, zum Beladen und Entladen des Güterwagens zugänglich ist.

Die Plane des Planenschiebewagens kann wasserdicht sein. Die Plane kann eine übliche Plane aus Planenwebstoff (beschichtetes Gewebe) oder eine Plane aus Metall sein.

Der erfindungsgemäße Güterwagen ist für den Transport von Coils (Stahlcoils) mit Coilmulden (Aufnahmemulden) ausgestattet sein. Insbesondere sind beispielsweise vier Coilmulden für den Transport von Stahlcoils vorgesehen.

Von Vorteil bei der Erfindung ist, dass die beidseits der Coilmulden vorgesehenen Keile so ausgebildet sind, so dass sie bei Nichtgebrauch einer Coilmulde platzsparend umgeklappt werden können, dass sie eine Muldenabdeckung bilden und sich eine durchgehende Ladefläche ergibt.

Bei der Erfindung ist vorgesehen, dass in den Coilmulden mehrere, z.B. fünf, Rungentaschen vorgesehen sind, die (stabile) Einsteckrungen aufnehmen können, um den Formschluss und die korrekte Lastverteilung der Stahlcoils zu sichern.

Wenn die Einsteckrungen, welche die Abmessungen von 80*80*1500mm haben können, nicht benötigt sind, werden sie in die Coilmulde (Coilwanne, Aufnahmemulde) abgelegt und die Coilmulde wird mit einer Muldenabdeckung verschlossen.

Durch die Abdeckung der Coilmulden ergibt sich eine durchgehende Ladefläche des erfindungsgemäßen Güterwagens.

In einer Ausführungsform ist die Abdeckung der Coilmulden leicht handzuhaben und so stabil, dass sie auch mit Staplerachslasten mit bis zu 5.500 kg gut befahren werden können.

Die Ausrichtung der Coilmulden kann je nach Bedarf in Längsrichtung und/oder Querrichtung des Güterwagens, insbesondere dessen Ladefläche erfolgen.

In einer weiteren Ausgestaltung der Erfindung sind in dem erfindungsgemäßen Güterwagen Containerecken vorgesehen. Beispielsweise sind sechzehn, insbesondere im Boden der Ladefläche versenkbare, Containerecken vorgesehen, sodass 3*20 Fuß, 1*40+20 Fuß oder 2*30 Fuß Container in dem erfindungsgemäßen Güterwagen, insbesondere unter der Schiebeplane transportiert werden können.

In einer Ausführungsform ist der erfindungsgemäße Güterwagen mit Rungen ausgebildet, wobei insbesondere acht Rungenpaare vorgesehen sind, die im Güterwagen, insbesondere entlang der Ränder zur Ladefläche, in verschiedenen Positionen, verankert werden können. Hierfür befinden sich in einer bevorzugten Ausführungsform im Wagenboden (Ladefläche) Einstecköffnungen (Aufnahmeöffnungen, Rungentaschen), wobei vorgesehen ist, dass mehrere Gruppen von Einstecköffnungen vorgesehen sind, sodass der Abstand der Rungen voneinander an die Breite des zu transportierenden Gutes berücksichtigt werden kann, und dass die Rungen in unterschiedlichen Stellungen der Ladefläche in die Rungentaschen eingesetzt werden. Beispielsweise sind Breiten von 2,70 m bis 2,30 m möglich.

Insbesondere ist im Rahmen der Erfindung vorgesehen, dass die Rungen eine freie Höhe von 2, 20 m haben können.

In einer Ausführungsform ist vorgesehen, dass acht Rungenpaare vorgesehen sind, welche die Ladefläche des Güterwagens auf neun gleich große Felder aufteilen.

In einer Ausführungsform ist vorgesehen, dass die Rungen bei Nichtgebrauch in einem Rungendepot versorgt werden, das sich an dem Güterwagen(z.B. unterhalb der Ladefläche) oder stirnseitig im Güterwagen befinden kann.

In einer Ausführungsform ist vorgesehen, dass die Rungen als Haltevorrichtungen für Latten, insbesondere aus Holz oder Metall (Aluminium), zur Ladungssicherung aufweisen können.

Beispielsweise sind übereinander drei oder vier solcher Latten vorgesehen.

Zur Ladungssicherung sind im Boden des Güterwagens (Ladefläche) in einer Ausführungsform Zurrvorrichtungen (z.B. Zurrösen) eingelassen. Beispielsweise sind zehn Paar Zurrvorrichtungen vorgesehen.

Zusätzlich verfügt der erfindungsgemäße Wagen in einer Ausführungsform über mehrere, insbesondere acht Ladeschwellen, die im Boden eingelassen und in eine über die Oberseite der Ladefläche vorstehende Stellung (Gebrauchslage) umklappbar sind. Auf in Gebrauchslage umgeklappten Ladeschwellen können Güter, z.B. Schnittholz mit Abstand von der Oberseite der Ladefläche transportiert werden.

Seitlich, an Rungen anbringbare Latten aus Holz oder Metall (Aluminium) können durch andere Ladungssicherungssysteme ausgetauscht werden, sodass vielfältige Sicherungsmöglichkeiten der Ladung durch Einstecklatten vorn und hinten möglich sind.

In einer Ausführungsform der Erfindung ist vorgesehen, dass Querbalken vorgesehen sind, die, in längsseitige Latten, die an den Rungen angebracht sind, eingehängt werden können. Diese Querbalken ermöglichen eine Doppelstockausführung, sodass der Transport von zusätzlichen Paletten in einer zweiten Ebene möglich ist.

Wie erwähnt ist der Grundaufbau des erfindungsgemäßen Güterwagens insbesondere ein Planenschiebewagen, sodass die Waren, vor äußeren Einflüssen durch Planen geschützt, transportiert werden können.

Vorteile des erfindungsgemäßen Güterwagens lassen sich je nach Ausführungsform wie folgt beschreiben:

Durch die Vielzahl von Eigenschaften sind - nach einfachem Umrüsten - zahlreiche Kombinationen von Warentransporten möglich, wodurch sich der Leerlaufanteil des Güterwagens auf ein Mindestmaß verringern lässt. So ist es möglich auf der Rückfahrt eine Ware zu befördern, die bei herkömmlichen Güterwagen bei der Hinfahrt keine Paarigkeit hätte.

Die erfindungsgemäße Ausgestaltung des Güterwagens erlaubt es auf der Hin- und auf der Rückfahrt verschiedene Waren zu transportieren. So ist es zum Beispiel möglich bei einer Fahrt Schnittholz und auf der Rückfahrt Stahlcoils zu transportieren.

Es ist mit dem erfindungsgemäßen Güterwagen auch möglich, gleichzeitig verschiedene Waren zu befördern. Zum Beispiel können Palettenwaren auf einer Länge von 5 Lademetern, Schnittholz in einer Länge von 4 Metern und ein 20 Fuß Container gleichzeitig transportiert werden. Beispielsweise ist auch möglich, gleichzeitig zwei Coils und Palettenware zu befördern, wobei aber auch jede andere Kombination der verschiedenen Funktionen möglich ist.

In einer möglichen Ausführungsform der Erfindung sind die Aufbauten des Güterwagens in unbeladenem Zustand abnehmbar und stapelbar. Der große Vorteil liegt somit darin, auf saisonal bedingte Schwankungen jederzeit reagieren zu können und zu verhindern, dass Spezialgüterwagen wiederholt ungenutzt abgestellt bleiben, was sich negativ auf die Wirtschaftlichkeit des Fahrzeuges auswirkt. Dieser große Vorteil gleicht allfällige, nicht standardgemäße Wagenlängen aus und kompensiert auf Grund der dauerhaft höheren Produktivität auch die insgesamt höheren Beschaffungs- und Mietkosten bei weitem. Auf diese Weise trägt die Erfindung wesentlich dazu bei, die Anzahl benötigter Güterwagen für verschiedenste Ladegüter wirksam zu reduzieren.

Durch die vielseitigen Einsatzmöglichkeiten des erfindungsgemäßen Güterwagens, ist dieser auch für Transportunternehmer von Interesse, da jetzt die Möglichkeit besteht, ihre Ware kostengünstig auf der Bahn (Eisenbahn) zu transportieren, sodass der heute übliche Straßentransport vermieden oder wenigstens verringert wird.

In einer bevorzugten Ausführungsform der Erfindung kann vorgesehen sein, dass Coilmulden für die Aufnahme von Stahlcoils paarweise angeordnet sind.

In einer bevorzugten Ausführungsform der Erfindung kann vorgesehen sein, dass die Containerecken in den Boden der Ladefläche versenkbar ausgebildet sind.

In einer bevorzugten Ausführungsform der Erfindung kann vorgesehen sein, dass insgesamt sechzehn Containerecken für 3*20Fuss, 1*40+20Fuss oder 20*30Fuss Container vorgesehen sind.

In einer bevorzugten Ausführungsform der Erfindung kann vorgesehen sein, dass jeweils mehrere Einstecköffnungen für Rungen in Reihen, die quer zur Längserstreckung der Ladefläche ausgerichtet sind, vorgesehen sind.

In einer bevorzugten Ausführungsform der Erfindung kann vorgesehen sein, dass unterhalb der Ladefläche Aufnahmeräume für nicht benötigte Rungen vorgesehen sind.

In einer bevorzugten Ausführungsform der Erfindung kann vorgesehen sein, dass die Reihen von Einstecköffnungen für Rungen jeweils sechs Einstecköffnungen aufweisen.

Weitere Einzelheiten und Merkmale sowie Vorteile der Erfindung ergeben sich aus der nachstehenden Beschreibung bevorzugter Ausführungsbeispiele anhand der Zeichnungen.

Es zeigt
Fig. 1 einen erfindungsgemäß ausgebildeten Güterwagen in Form eines Planenwagens,
Fig. 2 den Güterwagen aus Fig. 1 mit Palletten beladen,
Fig. 3 einen erfindungsgemäßen Güterwagen ohne Fahrgestell und ohne weitere Einzelheiten mit Papierrollen und Langholz beladen,
Fig. 4 einen erfindungsgemäßen Güterwagen ohne Fahrgestell und ohne weitere Einzelheiten mit Palletten Langholz und einem Container beladen,
Fig. 5 einen erfindungsgemäßen Güterwagen ohne Fahrgestell und weitere Einzelheiten mit Palletten Langholz und einem Stahlcoil beladen,
Fig. 6 einen erfindungsgemäßen Güterwagen ohne Fahrgestell mit einem Stahlcoil und Papierrollen beladen,
Fig. 7 eine Einzelheit der Ladefläche mit abklappbaren seitlichen Begrenzungen von in der Ladefläche vorgesehenen Coilmulden,
Fig. 8 einen erfindungsgemäßen Güterwagen mit Stahlcoils in Coilmulden beladen,
Fig. 9 teilweise einen erfindungsgemäßen Güterwagen mit zwei Stahlcoils beladen,
Fig. 10 vier verschiedene Möglichkeiten einen erfindungsgemäßen Güterwagen auszustatten.

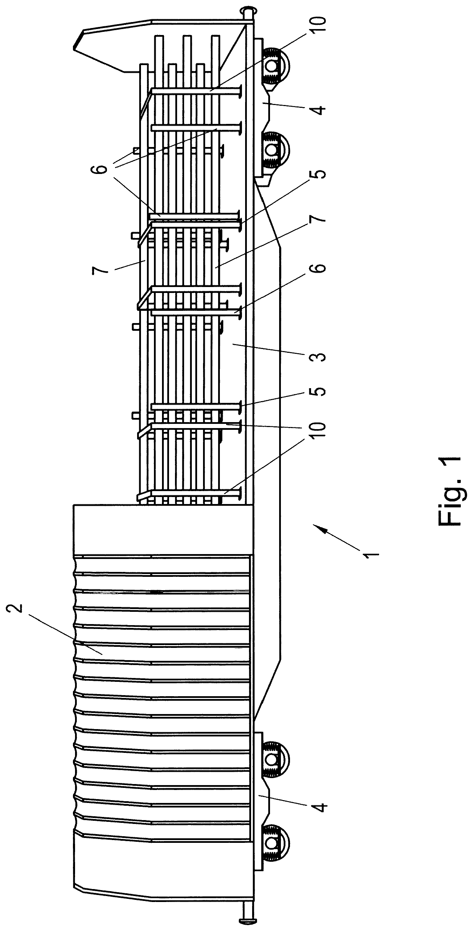

Ein in Fig. 1 gezeigter Güterwagen 1 ist als Planenschiebewagen ausgebildet und in Fig. 1 in geöffneter Stellung der Planen 2, die entlang der Ladefläche 3 entlang des Güterwagens 1 verschiebbar sind, dargestellt.

Im Beispiel ist der Güterwagen 1 als vierachsiger Güterwagen 1 mit zwei Drehgestellen 4 an beiden Enden ausgebildet. Dies ist lediglich ein Beispiel für das Laufwerk des erfindungsgemäßen Güterwagens 1, da dieser beispielsweise auch als Zweiachs- oder Dreiachswagen ausgebildet sein kann.

Im in Fig. 1 gezeigten Ausführungsbeispiel sind in der Ladefläche 3 in als Rungentaschen ausgebildete Aufnahmeöffnungen 5 eingesteckte Rungen 6 vorgesehen, die paarweise angeordnet und in ausgewählte Einstecköffnungen 5 der Ladefläche 3 eingesetzt sind. Im gezeigten Ausführungsbeispiel sind acht Paare Rungen 6 vorgesehen, welche die Ladefläche 3 des Güterwagens 1 in neun gleiche Felder aufteilen. Im gezeigten Ausführungsbeispiel sind an den Rungen 6 mehrere Latten 7 als Ladesicherung vorgesehen. Die Latten 7 sind horizontal, also parallel zur Ladefläche 3 des Güterwagens 1 ausgerichtet.

Die Einstecköffnungen 5 sind zu mehreren über die Länge des Güterwagens 1 verteilt angeordneten, sich quer zur Ladefläche 3 erstreckenden Gruppen aus jeweils mehreren Rungentaschen 5 zusammengefasst. So kann der Abstand jedes Paares von Rungen 6 der Breite des Ladegutes angepasst werden.

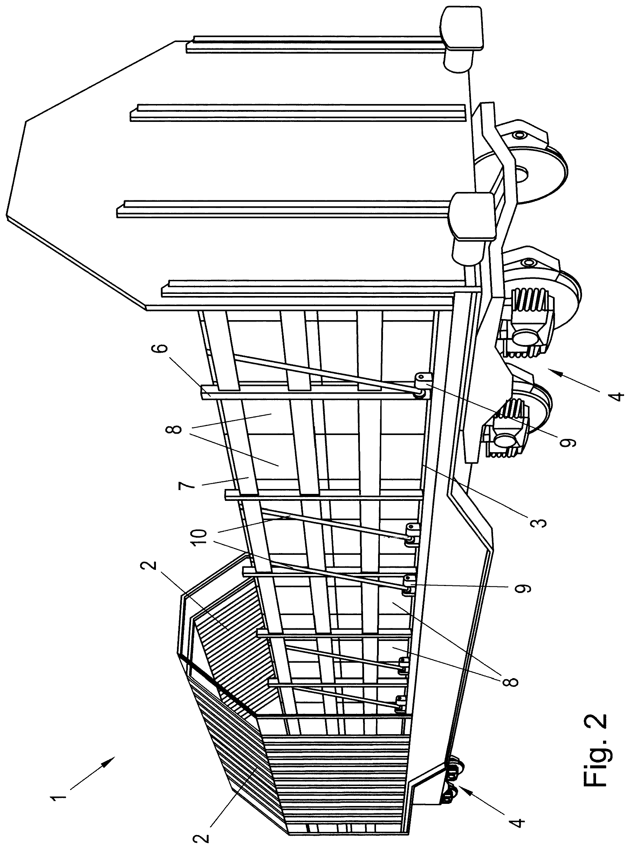

In Fig. 2 ist ein erfindungsgemäßer Güterwagen 1 gezeigt, der mit Paletten 8 beladen ist. Fig. 2 zeigt auch, dass an der Ladefläche 3 Zurrvorrichtungen 9 vorgesehen sind, mit welchen Spannbänder 10 gespannt werden können, um die Ladung zusätzlich zu den Rungen 6 und den Ladesicherungen in Form von Latten 7 / Leisten zu sichern.

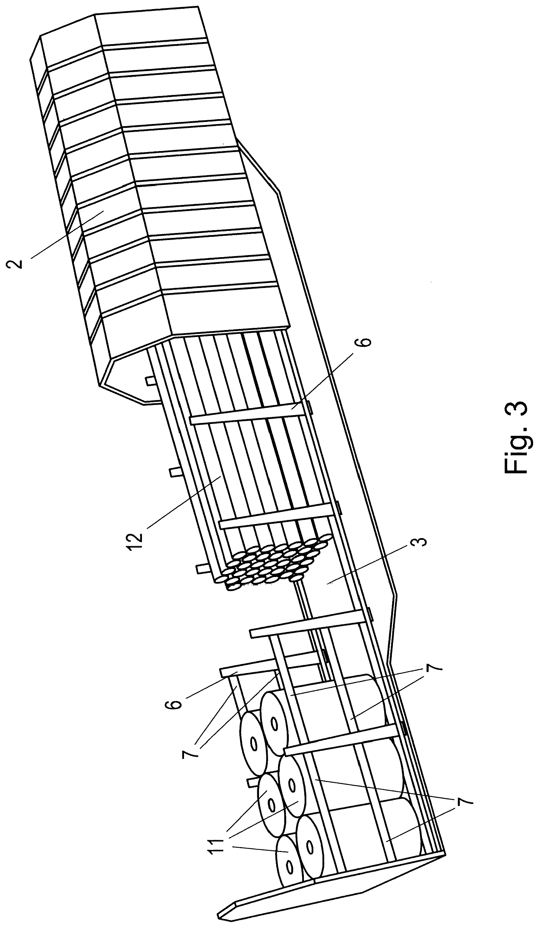

In Fig. 3 ist ein Ausführungsbeispiel eines Güterwagens 1 gezeigt, bei dem auf der Ladefläche 3 an einem Ende (links in Fig. 3) sechs Papierrollen 11 angeordnet sind, und an der übrigen Ladefläche 3 Langholz 12 in Form von Rundholz angeordnet ist. Die Spannbänder 10 und andere Ladungssicherungen sind in Fig. 3 nicht dargestellt.

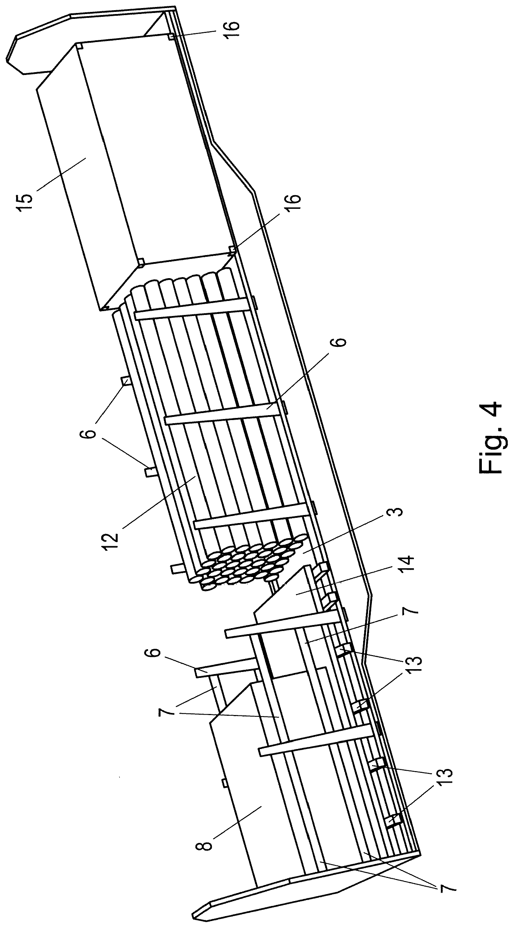

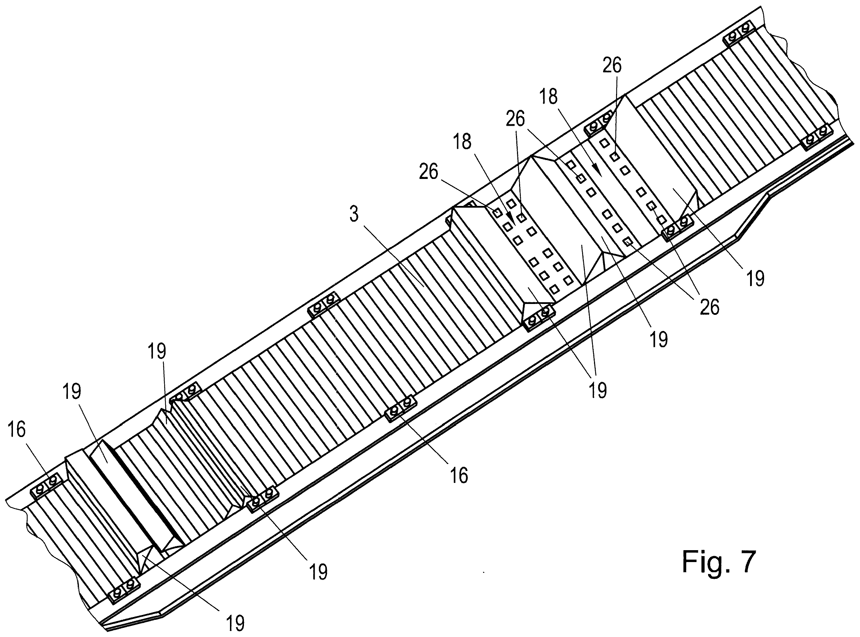

Fig. 4 zeigt eine andere Möglichkeit einen erfindungsgemäßen Güterwagen 1 zu beladen. So ist von links nach rechts in Fig. 4 eine Anordnung von Paletten 8 auf Ladeschwellen 13 und einer auf diese aufgelegte Platte 14 vorgesehen. Weiter ist (in der Längsmitte) Langholz 12 (Rundhölzer) gestapelt, das zwischen Rungen 6 angeordnet ist. Am anderen Ende des Güterwagens 1 ist ein Container 15 aufgestellt. Für das Festlegen des Containers 15 sind Containerecken 16 (Containerösen) vorgesehen, die in die Ladefläche 3 versenkbar ausgebildet sind und beispielsweise in den Fig. 7, 8 oder 9 gezeigt sind.

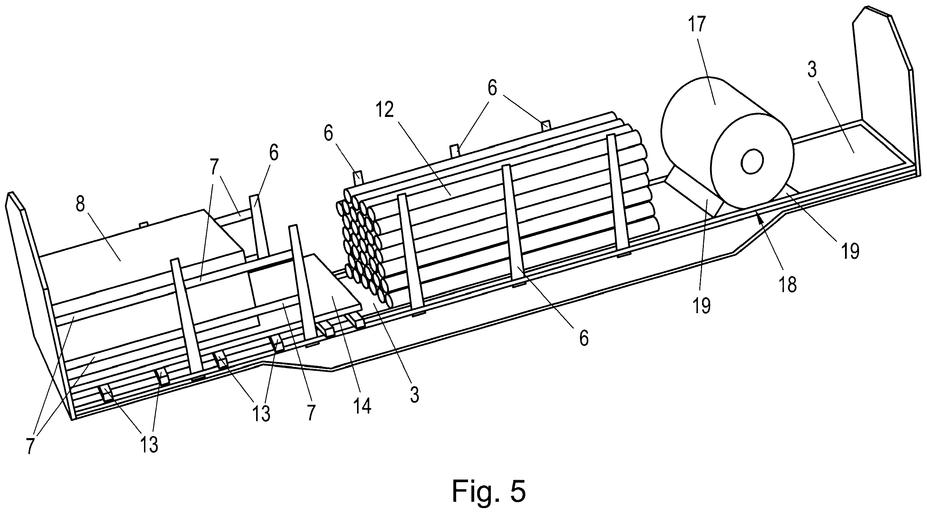

Bei der Verwendungsart gemäß Fig. 5 ist anstelle des in Fig. 4 vorgesehenen Containers 15 ein Stahlcoil 17 in einer Coilmulde 18 vorgesehen. Die Coilmulde 18 ist im Beispiel von Fig. 5 quer zur Fahrtrichtung, also quer zur Längserstreckung der Ladefläche 3 des Güterwagens 1, ausgerichtet und wird in Fahrtrichtung vorne und hinten durch Keile 19 ergänzt.

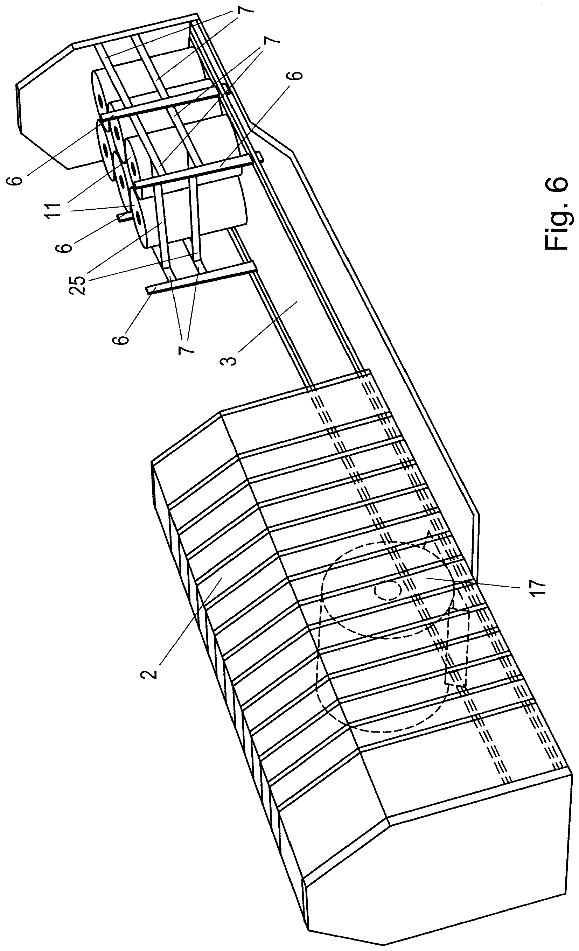

In Fig. 6 ist gezeigt, dass mit dem erfindungsgemäßen Güterwagen 1 neben Papierrollen 11, die an einem Ende des Güterwagens 1 bzw. dessen Ladefläche 3 angeordnet sind, in einer Coilmulde 18 ein Stahlcoil 17 transportiert werden kann. Die Papierrollen 11 sind durch Rungen 6, Latten 7 und Querlatten 25 gesichert.

Fig. 7 zeigt wie die Keile 19 beidseits der Coilmulden 18 so ausgebildet sind, sodass sie bei Nichtgebrauch einer Coilmulde 18 platzsparend umgeklappt werden können, dass sie eine Muldenabdeckung bilden und sich eine durchgehende Ladefläche 3 ergibt.

Fig. 7 zeigt die Containerecken 16 für Container 15, die in die Ladefläche 3 absenkbar und aus dieser anhebbar ausgebildet sein können.

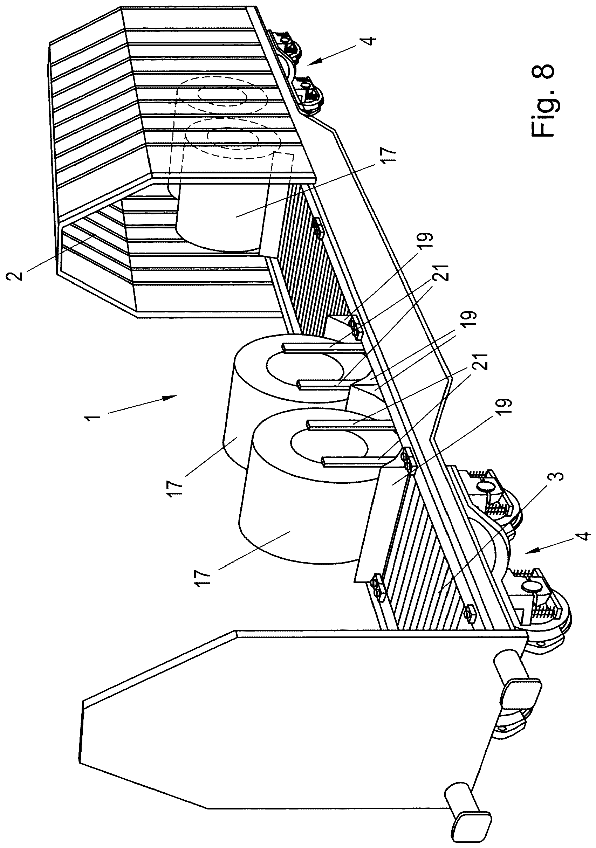

Fig. 8 zeigt an einem Beispiel, wie an einem erfindungsgemäßen Güterwagen 1 vier Stahlcoils 17 in Coilmulden 18 transportiert werden können, wozu die Keile 19 beidseits der Coilmulden 18 aus der Ladefläche 3 in ihre Gebrauchslage hochgeklappt sind.

Zur Sicherung der Coils 17 in einer Richtung quer zur Längserstreckung des Güterwagens 1 werden (vgl. Fig. 8)

Einsteckrungen 21 in Einstecköffnungen 26 (vgl. Fig. 8) eingesteckt. Da quer zur Längserstreckung des Güterwagens 1 nebeneinander mehrere Einstecköffnungen 26 (vgl. Fig. 7) vorgesehen sind, kann der Abstand der Einsteckrungen 21 an die Länge der Coils 17 angepasst werden.

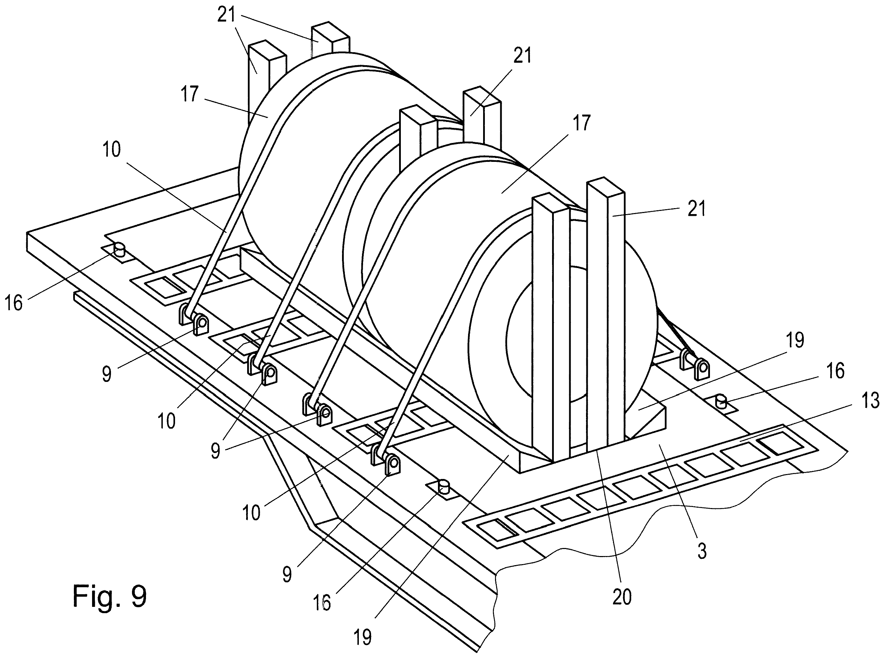

Fig. 9 zeigt, dass Coilmulden 18 des erfindungsgemäßen Güterwagens 1 nicht nur quer zur Längserstreckung des Güterwagens 1 bzw. dessen Ladefläche 3 sondern auch parallel zur Längserstreckung des Güterwagens 1 ausgerichtet sein können.

Fig. 9 zeigt auch, dass im Bereich der Coilmulden 18 Rungentaschen 20 (Einstecköffnungen) vorgesehen sind, in welche Einsteckrungen 21 zur zusätzlichen Ladesicherung der Stahlcoils 17 eingesetzt werden können. Die Einsteckrungen 21 werden bei Nichtgebrauch in den Coilmulden 18 versorgt und die Keile 19 beidseits der Coilmulden 18 in ihre Nichtgebrauchslage umgeklappt, sodass sich eine durchgehend ebene Ladefläche 3 ergibt.

Auch bei dieser Variante sind nebeneinander mehrere Einstecköffnungen 20 vorgesehen, damit die Einsteckrungen 21 (Steher) mit der Länge der Stahlcoils 17 entsprechendem Abstand voneinander angeordnet werden können. Die zwischen den Stahlcoils 17 vorgesehenen Einsteckrungen 21 sind nicht unbedingt erforderlich, dies insbesondere wenn die Stahlcoils 17 unmittelbar nebeneinander, also aneinander liegend, in der Coilmulde 18 liegen.

Fig. 9 zeigt auch, dass die Stahlcoils 17 zusätzlich durch Spannbänder 10, die an Zurrvorrichtungen 9 festgelegt sind, gesichert werden können.

In Fig. 9 ist auch gezeigt, dass an der Ladefläche 3 in Gebrauchslage nach oben abstehend Containerecken 16 vorgesehen sind, die in Verbindung mit Containern 15, zur Lagesicherung derselben, bestimmt sind.

In Fig. 9 ist weiters gezeigt, dass in der Ladefläche 3 des erfindungsgemäßen Güterwagens ein- und ausklappbare Ladeschwellen 13 vorgesehen sind, die in Fig. 9 in (eingeklappter) Nichtgebrauchslage dargestellt sind, und deren (ausgeklappte) Gebrauchslage, in der sie über die Ladefläche 3 oben vorstehen, beispielsweise in Fig. 4 und 5 gezeigt ist.

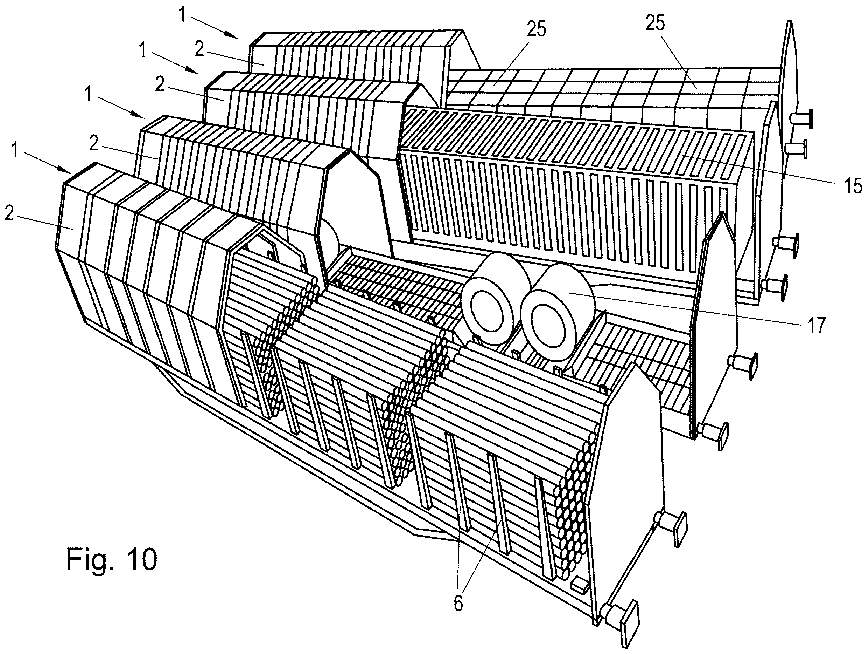

In Fig. 10 sind mehrere Ausführungsformen erfindungsgemäßer Güterwagen 1 gezeigt. Der vorderste Güterwagen 1 ist mit Planen 2 ausgestattet und mit Rundholz, das zwischen Rungen 6 angeordnet ist, beladen. Der nächste Güterwagen 1 ist ähnlich wie der Güterwagen 1 aus Fig. 8 mit Stahlcoils 17 beladen. Daneben ist ein Güterwagen 1 vorgesehen, der mit einem (langen) Container 15 beladen ist. Der in Fig. 10 ganz hinten gezeigte Güterwagen 1 ist mit mehreren Stückgutkisten 25 beladen.

Es versteht sich, dass die in den Fig 1 bis 3, 6, 8 und 10 in der Offenstellung gezeigten Planen 2 in eine den gesamten Güterwagen 1 (wasserdicht) abdeckende Gebrauchslage verschoben werden können.

Zusammenfassend kann ein Ausführungsbeispiel der Erfindung wie folgt beschrieben werden:

Ein Güterwagen 1 mit einer Ladefläche 3 und einem Laufwerk aus zwei Drehgestellen 4 besitzt in der Ladefläche 3 wenigstens eine Coilmulde 18 für Stahlcoils 17, wobei der Coilmulde 18 Einstecköffnungen 20 für Einsteckrungen 21 zugeordnet sind. Neben der Coilmulde 18 sind in die Ladefläche 3 einklappbare Keile 19 vorgesehen, sodass die Coilmulden 18 durch Einklappen der Keile 19 unter Ausbilden einer ebenen Ladefläche 3 geschlossen werden können. In der Ladefläche 3 sind weiters Einstecköffnungen 5 für entlang der Längsseiten des Güterwagens 1 einzusteckende Rungen 6 vorgesehen. Über die Ladefläche 3 verteilt sind weiters Containerecken 16 vorgesehen, damit Container 15 an der Ladefläche 3 gesichert werden können. In der Ladefläche 3 sind versenkbar auch Zurrvorrichtungen 9 vorgesehen, mit welchen Spannbänder 10 zur Sicherung der Ladung, die auf der Ladefläche 3 abgestellt ist, gespannt werden können.

## Patentansprüche

1. Güterwagen (1) für die Eisenbahn, mit einer Ladefläche (3) und wenigstens zwei Achsen, insbesondere mit vier, in zwei Drehgestellen (4) gelagerten Achsen, wobei in der Ladefläche (3) Coilmulden (18) für Stahlcoils (17) vorgesehen sind, wobei neben den Coilmulden (18) für Stahlcoils (17) zur Sicherung der Stahlcoils (17) Keile (19) mit einer im wesentlichen dreieckförmigen Querschnittsform angeordnet sind, wobei die Keile (19) mit der Ladefläche klappbar verbunden sind, und die Keile bei Nichtgebrauch in den Coilmulden (18) angeordnet sind, **dadurch gekennzeichnet, dass** Einsteckrungen (21) und in der Ladefläche im Bereich der Coilmulden (18) Einstecköffnungen (20) für die Einsteckrungen (21) vorgesehen sind, wobei die Einsteckrungen (21) bei Nichtgebrauch in den Coilmulden (18) versorgt und die Keile (19) beidseits der Coilmulden (18) in ihre Nichtgebrauchslage umgeklappt werden, sodass sich eine durchgehend ebene Ladefläche (3) ergibt.

2. Güterwagen nach Anspruch 1, **dadurch gekennzeichnet, dass** in der Ladefläche (3) Containerecken (16) für unterschiedlich große Container (15) vorgesehen sind.

3. Güterwagen nach Anspruch 1 oder 2, **dadurch gekennzeichnet, dass** Einstecköffnungen (5) für Rungen (6), über die seitlichen Längsränder der Ladefläche (3) verteilt angeordnet sind.

4. Güterwagen nach Anspruch 3, **dadurch gekennzeichnet, dass** an den Rungen (6) Haltevorrichtungen für parallel zur Längserstreckung des Güterwagens (1) verlaufende Latten (7), insbesondere Latten (7) aus Holz oder Metall (z.B. Aluminium) vorgesehen sind.

5. Güterwagen nach Anspruch 4, **dadurch gekennzeichnet, dass** an den Rungen (6) Halterungen für längsverlaufende Latten (7) in unterschiedlichen Höhen, nämlich mit unterschiedlichem Abstand von der Ladefläche (3), vorgesehen sind.

6. Güterwagen nach einem der Ansprüche 3 bis 5, **dadurch gekennzeichnet, dass** über die Länge der Ladefläche (3) verteilt acht Einstecköffnungen (5) für Rungen (6) an jeder Längsseite der Ladefläche (3) bzw. acht Reihen von Gruppen von Einstecköffnungen (5) an jeder Längsseite der Ladefläche (3) vorgesehen sind.

7. Güterwagen nach einem der Ansprüche 1 bis 6, **dadurch gekennzeichnet, dass** über die Längsseiten der Ladefläche (3) verteilt Zurrvorrichtungen (9) vorgesehen sind.

8. Güterwagen nach Anspruch 7, **dadurch gekennzeichnet, dass** jeweils wenigstens zwei Zurrvorrichtungen (9) in quer zur Längserstreckung der Ladefläche (3) ausgerichteten Reihen vorgesehen sind.

9. Güterwagen nach einem der Ansprüche 1 bis 8, **dadurch gekennzeichnet, dass** in die Ladefläche (3) eingelassene und in diese umklappbare Ladeschwellen (13) vorgesehen sind.

10. Güterwagen nach Anspruch 9, **dadurch gekennzeichnet, dass** die Ladeschwellen (13) quer zur Längserstreckung der Ladefläche (3) ausgerichtet sind.

11. Güterwagen nach einem der Ansprüche 2 bis 10, **dadurch gekennzeichnet, dass** die Containerecken (16) in den Boden der Ladefläche (3) versenkbar ausgebildet sind.

## Claims

1. Freight car, comprising:
a loading area (3) and at least two axles, in particular four axles, mounted in two bogies (4), whereby said loading area (3) has formed therein coil troughs (18) for steel coils (17), whereby said loading area (3) has disposed alongside said coil troughs (18), wedges (19) having a substantially triangular cross section for securing the steel coils (17), whereby said wedges (19) are foldable connected to said loading area, and said wedges are disposed in said coil troughs (18), **characterized in that** insertion stakes (21) and in the loading area insertion openings for insertion stakes (21) are provided in a vicinity of said oil troughs (18), whereby the insertion stakes (21) are accommodated in the coil troughs (18) when not in use and the wedges (19) to form on both sides of the coil troughs (18) are folded into their non-use position so that a continuous loading surface is formed.

2. Freight car according to claim 1, **characterized in that** said loading area (3) is formed with container corners (16) for differently sized containers (15).

3. Freight car according to claim 1 or 2, **characterized in that** insertion openings (5) for stakes (6) are distributed along longitudinal side edges of said loading area (3).

4. Freight car according to claim 3, **characterized in that** on said stakes (6) are provided holding devices for battens (7), in particular battens (7) made of wood or metal (aluminium), extending parallel to a longitudinal extent of the freight car (1).

5. Freight car according to claim 4, **characterized in that** holding devices for longitudinally extending battens (7) are provided at different heights on the stakes (6), namely with a different spacing from the loading area (3).

6. Freight car according to claims 3 to 5, **characterized in that** eight insertion openings (5) for stakes (6) are distributed over the length of said loading area (3) on each longitudinal side thereof or eight rows of groups insertion openings (5) are formed on each longitudinal side of said loading area (3).

7. Freight car according to one of claims 1 to 6, **characterized in that** lashing devices (9) are distributed over the longitudinal sides of said loading area (3).

8. Freight car according to claim 7, **characterized in that** at least two said lashing devices (9) are provided in each case in rows aligned transversely to a longitudinal extent of said loading area (3).

9. Freight car according to one of claims 1 to 8, **characterized in that** load restraints (13) are inserted in said loading area (3) and configured to be folded down therein.

10. Freight car according to claim 9, **characterized in that** said loading restraints (13) are aligned transversely to a longitudinal extent of said loading area (3).

11. Freight car according to claims 2 to 10, **characterized in that** said container corners (16) are retractably formed in the floor of said loading area (3).

## Revendications

1. Wagon de marchandises (1), pour le chemin de fer, avec une surface de chargement (3) et au moins deux essieux, notamment avec quatre essieux logés dans deux boggies (4), dans la surface de chargement (3) étant prévues deux gorges (18) pour bobines pour des bobines d'acier (17), à côté des gorges (18) pour bobines, pour des bobines d'acier (17), pour bloquer les bobines d'acier (17) étant placées des cales (19) avec une section transversale de forme sensiblement triangulaire, les cales (19) étant assemblées de manière rabattable avec la surface de chargement et lorsqu'elles ne sont pas utilisées, les cales étant placées dans les gorges (18) pour bobines,
**caractérisé en ce que** des ranchers enfichables (21) et dans la surface de chargement, dans la région des gorges (18) pour bobines des orifices d'enfichage (20) pour les ranchers enfichables (21) sont prévus, lorsqu'ils ne sont pas utilisés, les ranchers enfichables (21) étant rangés dans les gorges (18) pour bobines et les cales (19) étant rabattues de part et d'autre des gorges (18) pour bobines, dans leur position de non-utilisation, de sorte qu'il en résulte une surface de chargement (3) plane en continu.

2. Wagon de marchandises selon la revendication 1, **caractérisé en ce que** dans la surface de chargement (3) sont prévus des angles à conteneurs (16) pour des conteneurs (15) de différentes tailles.

3. Wagon de marchandises selon la revendication 1 ou la revendication 2, **caractérisé en ce que** des orifices d'enfichage (5) pour des ranchers (6) sont placés en étant distribués sur les bords longitudinaux latéraux de la surface de chargement (3).

4. Wagon de marchandises selon la revendication 3, **caractérisé en ce que** sur les ranchers (6) sont prévus des dispositifs de retenue pour des lattes (7) s'écoulant à la parallèle de l'extension longitudinale du wagon de marchandises (1), notamment des lattes (7) en bois ou en métal (par ex. aluminium).

5. Wagon de marchandises selon la revendication 4, **caractérisé en ce que** des fixations pour des lattes (7) s'écoulant en longueur sont prévues sur les ranchers (6) à différentes hauteurs, à savoir avec un écart différent par rapport à la surface de chargement (3).

6. Wagon de marchandises selon l'une quelconque des revendications 3 à 5, **caractérisé en ce que**, distribué(e)s sur la longueur de la surface de chargement (3), huit orifices d'enfichage (5) pour des ranchers (6) sont prévus sur chaque côté longitudinal de la surface de chargement (3) ou huit rangées de groupes d'orifices d'enfichage (5) sont prévues sur chaque côté longitudinal de la surface de chargement (3).

7. Wagon de marchandises selon l'une quelconque des revendications 1 à 6, **caractérisé en ce que** distribués sur la longueur de la surface de chargement (3) sont prévus des dispositifs d'arrimage (9).

8. Wagon de marchandises selon la revendication 7, **caractérisé en ce que** chaque fois au moins deux dispositifs d'arrimage (9) sont prévus dans des rangées orientées à la transversale de l'extension longitudinale de la surface de chargement (3).

9. Wagon de marchandises selon l'une quelconque des revendications 1 à 8, **caractérisé en ce que** des traverses de chargement (13) encastrées dans la surface de chargement (3) et rabattables dans celle-ci sont prévues.

10. Wagon de marchandises selon la revendication 9, **caractérisé en ce que** les traverses de chargement (13) sont orientées à la transversale de l'extension longitudinale de la surface de chargement (3).

11. Wagon de marchandises selon l'une quelconque des revendications 2 à 10, **caractérisé en ce que** les angles à conteneur (16) sont conçus en étant susceptibles d'être noyés dans le fond inférieur de la surface de chargement (3).
